(19) Europäisches Patentamt / European Patent Office / Office européen des brevets

(11) **EP 1 128 694 B1**

(12) **FASCICULE DE BREVET EUROPEEN**

(45) Date de publication et mention de la délivrance du brevet:
**30.06.2010 Bulletin 2010/26**

(51) Int Cl.:
*H04W 36/18* (2009.01)    *H04W 52/40* (2009.01)

(21) Numéro de dépôt: **00403586.1**

(22) Date de dépôt: **18.12.2000**

(54) **Système de gestion de la puissance émise par une station de base au commencement d'une phase de handover**

Vorrichtung zur Verwaltung der durch eine Basisstation übertragenen Leistung am Anfang des Weiterreichens

System for managing the power emitted by a base station at the beginning of a hand over

(84) Etats contractants désignés:
**AT BE CH CY DE DK ES FI FR GB GR IE IT LI LU MC NL PT SE TR**

(30) Priorité: **30.12.1999 FR 9916848**

(43) Date de publication de la demande:
**29.08.2001 Bulletin 2001/35**

(73) Titulaire: **Mitsubishi Electric R&D Centre Europe B.V.**
**1119 NS Schiphol Rijk (NL)**

(72) Inventeur: **Voyer, Nicolas**
**35700 Rennes (FR)**

(74) Mandataire: **Maillet, Alain**
**Cabinet LE GUEN MAILLET**
**5, place Newquay**
**BP 70250**
**35802 Dinard Cedex (FR)**

(56) Documents cités:
**WO-A-99/00914    WO-A-99/31819**

• **ANDERSSON T: "TUNING THE MACRO DIVERSITY PERFORMANCE IN A DS-CDMA SYSTEM" PROCEEDINGS OF THE VEHICULAR TECHNOLOGY CONFERENCE,US,NEW YORK, IEEE, vol. CONF. 44, 8 juin 1994 (1994-06-08), pages 41-45, XP000496631**

**Description**

La présente invention concerne un système de télécommunication pour mobiles et, plus particulièrement, un système de gestion de la puissance émise par une station de base au commencement d'une phase de handover.

Un système de télécommunication pour mobiles selon la présente invention est du type qui comporte un réseau de stations de base auxquelles lesdits mobiles peuvent se connecter et ainsi être rattachés. Les mobiles peuvent communiquer avec le réseau par l'intermédiaire de stations de base qui délimitent chacune une zone de couverture qui est généralement appelée "cellule". Quand un mobile passe sous la couverture d'une nouvelle cellule, un processus, appelé, dans le domaine de la technique "processus de handover", est mis en oeuvre afin que la communication en cours puisse continuer, et ce, de manière transparente pour les utilisateurs. Pour ce faire, le réseau comporte des moyens pour que ledit mobile connecté à au moins une station de base dite initiale est, pendant une phase dite phase de handover, toujours connecté à ladite ou auxdites stations de base initiales mais également à une autre station de base dite cible.

Différents processus de handover sont aujourd'hui connus. L'un d'entre eux est dit "souple" et est mis en oeuvre dans des réseaux pour lesquels les zones de couverture des cellules se chevauchent entre elles. Ainsi, dans cette configuration, les mobiles peuvent se trouver en communication au même moment avec plusieurs stations de base.

On a représenté à la Fig. unique un mobile M qui se déplace (flèches A) d'une station de base BS1 vers une station de base BS2 et qui illustre le processus de handover souple.

Toutes les stations de base du réseau, *a fortiori* les stations de base BS1 et BS2 représentées, émettent des signaux balises avec une même puissance $P_{TX\_balise}$ constante dans le temps. Ces signaux balises sont communs à tous les mobiles du système. On a représenté les courbes de puissances $P_{RX1\_balise}$ et $P_{RX2\_balise}$ reçues par le mobile M à une distance respective des stations de base BS1 et BS2 des signaux balises respectivement émis par lesdites stations de base BS1 et BS2.

Le niveau de puissance de ces signaux balises reçu par le mobile M est souvent utilisé pour déterminer si ce mobile M se situe dans la zone de couverture de chaque station de base.

Le processus de handover peut être le suivant. Le mobile M est d'abord supposé être en communication avec la station de base BS1, dite station de base initiale. En se déplaçant vers la station de base BS2, dite station de base cible, il va se trouver sous la zone couverte par la station de base BS2. Il en sera ainsi, par exemple, lorsque la puissance du signal balise qu'il reçoit de la station de base BS2 devient supérieure à celle qu'il reçoit de la station de base BS1 à une valeur de x décibels près. Il passe alors en communication avec l'une et l'autre des stations de base BS1 et BS2 (point marqué a). Puis, lorsque la puissance du signal balise reçue de la station de base BS1 devient inférieure à la puissance balise reçue de la station de base BS2 à une valeur y décibels près (point marqué b), le mobile M abandonne la station de base BS1 et n'est donc plus en communication qu'avec la station de base BS2.

Dans la zone marquée I, le mobile n'est rattaché qu'à la station de base BS1. Dans la zone marquée II, le mobile est rattaché à la fois à la station de base BS1 et à la station de base BS2 et il est dit en phase de handover. Dans la zone marquée III, le mobile n'est rattaché qu'à la station de base BS2.

Un mobile M reçoit également de chaque station de base avec laquelle il est rattaché un signal utilisateur, dit aussi signal dédié, et ce, avec une certaine puissance reçue. Par exemple, à la Fig. unique, lorsqu'il est rattaché à la station de base BS1, il reçoit de celle-ci une puissance reçue $P_{RX1}$ de signal dédié. De même, lorsqu'il est rattaché à la station de base BS2, il reçoit de celle-ci une puissance reçue $P_{RX2}$ de signal dédié.

On notera qu'en phase de handover, il reçoit les signaux dédiés des stations de base BS1 et BS2 avec une puissance qui est la somme des puissances reçues $P_{RX1}$ et $P_{RX2}$. Les puissances reçues $P_{RX1}$ et $P_{RX2}$ sont égales aux puissances $P_{TX1}$ et $P_{TX2}$ qui sont respectivement émises par les stations de base BS1 et BS2, diminuées des réalisations des atténuations dues aux canaux de transmission respectivement entre les stations de base BS1 et BS2 et le mobile M.

Dans les systèmes de télécommunication pour mobiles, un mobile qui est rattaché à une station de base, émet à destination de cette station de base, outre des signaux utilisateurs, des ordres de commande de puissance, afin que ladite station de base commande sa propre puissance d'émission $P_{TX}$, de sorte que la puissance $P_{RX}$ reçue d'elle soit égale à une valeur prédéterminée. Ainsi, selon un mode connu de réalisation, lorsque la puissance totale qui est reçue par le mobile M est, soit trop élevée, soit trop basse, le mobile émet un ordre TPC de commande, soit de diminution, soit d'augmentation de puissance à destinations de toutes les stations de base auxquelles il est rattaché afin que celles-ci modifient leurs puissances d'émission dédiées respectives à une valeur correcte, généralement une valeur prédéterminée.

Pendant la phase de handover, le rapport des puissances émises par les différentes stations de base auxquelles est rattaché le mobile reste constant. Cependant, pendant cette phase de handover, il est important que les puissances transmises par toutes les stations de base auxquelles est rattaché le mobile soient égales, de manière qu'une transition douce puisse avoir lieu à l'entrée et en sortie de la phase de handover. En effet, si le rapport de puissance n'était pas égal à un au moment de l'entrée en phase de handover, il en résulterait un déséquilibre qui serait gardé tout le long du processus de handover.

Diverses solutions pourraient être apportées à ce problème de l'équilibre, pendant la phase de handover, des puissances émises par les stations de base auxquelles le mobile est rattaché.

La première consiste à prévoir une boucle d'équilibrage des puissances. Chaque station de base contrôle sa puissance d'émission et renvoie sa valeur à une unité centrale de gestion. Au moment où le mobile entre en phase de handover, cette unité centrale de gestion commande les stations de base de manière à équilibrer leurs puissances d'émission respectives comme décrit dans la demande WO 99/31819.

Une variante consisterait à déporter le calcul de la puissance d'émission dans chaque station de base, celle-ci devant connaître alors la puissance d'émission des autres stations de base auxquelles est rattaché le mobile.

Le problème posé par cette solution est que le temps total pour renvoyer la valeur de puissance de chaque station de base à l'unité centrale de gestion, pour calculer le bon niveau de puissance et pour le retourner aux stations de base est long. Durant ce temps, la qualité des canaux radio entre les stations de base et le mobile a pu être modifiée. Le déséquilibre de puissance qui peut en résulter peut causer l'arrêt des appels en cours.

Une autre variante consisterait à prévoir que la station de base initiale BS1 à laquelle le mobile est d'abord rattaché puisse mesurer sa propre puissance d'émission pendant une période donnée, à la suite de quoi elle transmettrait sa valeur à la station de base cible BS2. La station de base BS2 contrôlerait alors en continu sa propre puissance moyenne d'émission de manière à déduire le déséquilibre entre sa puissance moyenne d'émission et celle de l'autre station de base BS1. Cependant, dans cette solution, il faut un certain temps pour aligner la puissance d'émission de la station de base cible BS2. Ce temps peut typiquement être de l'ordre de celui de la transmission de la signalisation entre les stations de base, lequel peut être assez élevé comparé au temps de modification du comportement du canal. Si bien que durant cette période au moins, la puissance d'émission de la station de base cible BS2 n'est pas correcte.

Un autre problème résultant de cette méthode est que l'alignement de la puissance dédiée émise par la station de base cible est réalisé avec une valeur ancienne de la puissance moyenne dédiée transmise par la station de base initiale. La véritable valeur peut être complètement différente, à cause du délai de transmission de la signalisation et de l'évolution rapide de la réalisation de l'atténuation dus au canal de transmission entre la station de base initiale et le mobile.

Finalement, les techniques à boucle telles qu'elles viennent d'être décrites ne donnent pas entièrement satisfaction du fait des problèmes qui ont été mentionnés ci-dessus.

Une autre solution consisterait à initialiser juste avant le commencement de la phase de handover les puissances d'émission des stations de base à des valeurs égales. Par exemple, avant le commencement de la phase de handover, la station de base initiale sur laquelle le mobile est initialement connecté contrôle sa puissance d'émission et transmet sa valeur à la station de base cible. Ensuite, au moment où la station de base cible commence à émettre à destination du mobile, elle utilise le niveau de puissance correspondant à la valeur qui lui a été transmise par la station de base initiale.

Le problème de cette solution réside dans le fait que le temps de transit du niveau de puissance d'émission de la station de base initiale à la station de base cible peut être supérieur au temps des fluctuations du canal. Par exemple, lorsque la station de base cible BS2 commence à émettre, le niveau de puissance de la station de base initiale BS1 peut avoir changé, notamment du fait d'ordres TPC de commande de puissance émis avec une grande fréquence. Il en résulte des déséquilibres entre les niveaux de puissance d'émission des deux stations de base BS1 et BS2.

Le but de la présente invention est de proposer un système de télécommunication pour mobiles qui permette de résoudre les problèmes évoqués ci-dessus, et ainsi, d'égaler les puissances d'émission des différentes stations de base impliquées dans la phase de handover, et ce, pendant toute la durée de cette phase.

A cet effet, un système de télécommunication pour mobiles selon la présente invention est caractérisé en ce que chaque station de base à laquelle ledit mobile est connecté transmet régulièrement aux stations de base auxquelles ledit mobile est susceptible de se connecter pendant une phase de handover, la valeur moyenne de sa puissance d'émission, et en ce qu'une station de base, au moment du commencement de la phase de handover, déduit de ladite valeur moyenne et desdits ordres de commande de puissance qu'elle reçoit dudit mobile la valeur instantanée de la puissance émise par la ou lesdites stations de base initiales à ce moment et initialisant sa puissance d'émission à une valeur dérivée de ladite puissance instantanée.

Selon une autre caractéristique de l'invention, dans un système de télécommunication pour mobiles pour lequel lesdits ordres de commande de puissance sont des ordres d'augmentation ou de diminution de puissance d'une valeur donnée, la station de base cible déduit la valeur instantanée de la puissance émise par chaque station de base initiale au moment du commencement de la phase de handover, en additionnant la valeur moyenne de la puissance émise par chaque station de base initiale telle que reçue de ladite station de base initiale à une estimation de l'écart instantané entre la valeur moyenne de cette puissance dédiée et la réalisation instantanée de cette puissance dédiée.

Selon une autre caractéristique de l'invention, l'estimation de l'écart instantané entre la valeur moyenne de la puissance dédiée et la valeur instantanée de la puissance dédiée est avantageusement déterminée comme étant la différence entre la valeur intégrée desdits ordres reçus entre un temps de réception par la station de base cible de l'ordre de commencement de la phase de handover et le temps de commencement de ladite phase de handover, et la valeur moyenne de cette valeur entre le temps de réception par la station de base cible de l'ordre de commencement de la phase de handover et le temps de commencement de ladite phase de handover.

Selon une autre caractéristique de l'invention, ladite station de base cible initialise sa puissance d'émission à une valeur égale à la valeur instantanée de la puissance émise par chaque station de base initiale.

Selon une autre caractéristique de l'invention, chaque station de base transmet ladite valeur moyenne de sa puissance d'émission à chaque station de base via un organe de gestion centralisé dudit réseau de stations de base.

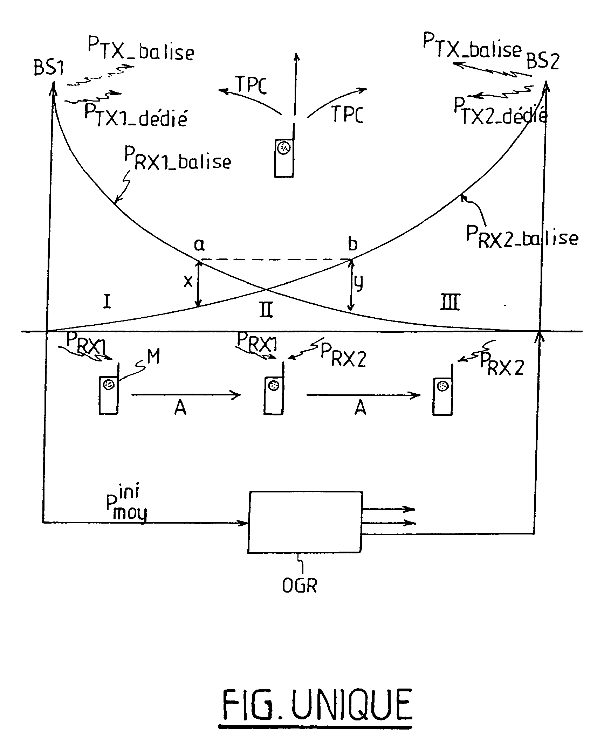

Les caractéristiques de l'invention mentionnées ci-dessus, ainsi que d'autres, apparaîtront plus clairement à la lecture de la description suivante d'un exemple de réalisation, ladite description étant faite en relation avec le dessin joint qui est un schéma montrant un mobile en communication avec une station de base initiale, puis en communication avec deux stations de base pendant une phase de handover.

La présente invention est mise en oeuvre dans un réseau de télécommunication pour mobiles avec contrôle automatique de la puissance émise par les stations de base. Pour ce faire, chaque mobile en communication avec une station de base émet en direction de celle-ci des ordres de commande de puissance TPC de manière à ce que la puissance qu'il reçoit de celle-ci soit égale à une valeur prédéterminée (voir Fig. unique).

Par exemple, selon une méthode généralement mise en oeuvre, lorsque la puissance qu'il reçoit est inférieure à cette valeur prédéterminée, il transmet un ordre TPC d'augmentation de puissance. Inversement, lorsque la puissance qu'il reçoit est supérieure à cette valeur prédéterminée, il transmet un ordre TPC de diminution de puissance.

Selon la présente invention, la station de base initiale ou chacune des stations de base initiales sur laquelle est d'abord connecté le mobile suit sa propre puissance d'émission dédiée $P_{TX1\_dédié}$ vers ledit mobile M et transmet régulièrement sa valeur moyenne $P_{moy}^{ini}$ à toutes les stations de base susceptibles d'être impliquées dans une phase de handover avec ce mobile M. Cette transmission peut être faite par l'intermédiaire d'un organe de gestion centralisé du réseau concerné OGR. C'est le cas dans l'exemple représenté à la Fig. unique où la station de base initiale BS1 transmet la valeur moyenne $P_{moy}^{ini}$ de sa puissance d'émission dédiée $P_{TX1\_dédié}$ à la station de base cible BS2 via l'organe OGR.

Quant à ces stations de base cibles, elles reçoivent du mobile M les ordres de commande TPC normalement destinées à la ou à chaque station de base initiale BS1.

De ces ordres de commande TPC, elles peuvent déterminer, à chaque instant $t$, l'écart $\triangle(t)$ entre la puissance instantanée $P_{TX1\_dédié}$ et la puissance moyenne $P_{moy}^{ini}$ d'émission de la ou de chaque station de base initiale BS1 et de là déduire, toujours à chaque instant $t$, la puissance instantanée d'émission $P_{TX1\_dédié}$ de la station de base initiale BS1. Au commencement de la phase de handover au temps $t_h$, la station de base cible BS2 initialise alors sa puissance d'émission $P_{TX2\_dédié}$ à une valeur dérivée de ladite puissance instantanée ainsi déduite, avantageusement à une valeur identique à la puissance instantanée de la station de base initiale déduite ($P_{TX2\_dédié} = P_{TXI\_dédié}$ *déduite).*

Un exemple de mise en oeuvre est maintenant explicité dans le cas où les ordres de commandes *TPC* sont des ordres d'augmentation ou de diminution de puissance d'émission.

On considère que chaque station de base cible susceptible d'être impliquée dans cette phase de handover avec le mobile M qui émet les ordres de commande *TPC* (*a fortiori* la station de base BS2) reçoit, à un instant $t_0$ du réseau, un ordre de commencement de la phase de handover. Dans le préambule de la présente description, on a décrit comment un tel ordre peut être engendré.

A partir de cet instant $t_{\varnothing}$, chaque station de base cible intègre les ordres de commande *TPC* émis par le mobile M et obtient ainsi un signal d'intégration *S(t)* qui est représentatif, à une constante près inconnue, de la puissance de transmission dédiée instantanée $P_{TX1\_dédié}(to)$ de la ou de chaque station de base initiale BSI au moment $t_0$ où la station de base cible concernée BS2 reçoit l'ordre de commencement de la phase de handover. On peut écrire la valeur de ce signal d'intégration *S(t)* à chaque instant $t$:

$$S(t) = \int_{t_0}^{t} TPC = P_{TX1\_dédié}(t) - P_{TX1\_dédié}(t_0)$$

A chaque instant $t$, chaque station de base cible peut faire une estimation de l'écart instantané $\Delta(t)$ entre la valeur moyenne $P_{moy}^{ini}$ de la puissance dédiée émise par la station de base initiale BS1 et la réalisation instantanée $P_{TX1\_dédié}$ de cette puissance dédiée. Cet écart $\Delta(t)$ est égal à la différence entre la valeur instantanée du signal d'intégration *S(t)* et la moyenne du même signal d'intégration *S(t).* On peut par conséquent écrire :

$$\Delta(t) = S(t) - E(S(t)) = S(t) - \frac{1}{t-t_0}\int_{t_0}^{t} S(t) = \int_{t_0}^{t} TPC - \frac{1}{t-t_0}\int_{t_0}^{t}\int_{t_0}^{\tau} TPC$$

où $\tau$ est une variable d'intégration.

Au commencement de la phase de handover au temps $t_h$, la station de base cible (par exemple la station de base BS2) détermine alors l'écart $\Delta(t_h)$. Puis, elle calcule la valeur instantanée de la puissance dédiée d'émission $P_{inst}^{ini}$ émise par la station de base initiale BS1 telle que reçue, par la station de base cible BS2, de ladite station de base initiale BS1. On peut donc écrire :

$$P_{inst}^{ini} = P_{moy}^{ini} + \Delta(t_h)$$

Enfin, elle initialise sa propre puissance d'émission $P_{inst}^{cible}$ à une valeur dérivée de la valeur ainsi calculée, avantageusement à une valeur égale à la valeur ainsi calculée. On peut donc écrire, dans ce dernier cas :

$$P_{émission}^{cible} = P_{inst}^{ini}$$

On notera que le procédé de la présente invention n'est pas sensible au temps de transit de l'information de la puissance d'émission de la station de base initiale aux stations de base cibles dans la mesure où l'on considère que les fluctuations avec le temps de cette puissance moyenne sont faibles.

**Revendications**

1. Système de télécommunication pour mobiles (M), ledit système comportant un réseau de stations de base (BS1, BS2) auxquelles lesdits mobiles peuvent se connecter et étant prévu pour qu'un mobile connecté à une station de base dite initiale (BS1) émette à destination de ladite station de base, dite initiale, outre des signaux utilisateurs, des ordres de commande de puissance (TPC) afin que ladite station de base dite initiale (BS1) commande sa propre puissance d'émission de sorte que la puissance reçue d'elle par ledit mobile soit égale à une valeur prédéterminée, ledit système comportant en outre des moyens pour que ledit mobile connecté à la au moins une station de base dite initiale est, pendant une phase dite phase de handover, toujours connecté à ladite au moins une station de base initiale (BS1), mais également à une autre station de base dite cible (BS2), **caractérisé en ce que** chaque station de base dite initiale (BS1) à laquelle ledit mobile est connecté transmet régulièrement aux stations de base dire cibles auxquelles ledit mobile est susceptible de se connecter pendant une phase de handover, la valeur moyenne de sa puissance d'émission et **en ce qu'**une station de base dite cible, au moment du commencement de la phase de handover, déduit de ladite valeur moyenne et desdits ordres de commande de puissance qu'elle reçoit dudit mobile la valeur instantanée de la puissance émise par la ou lesdites stations de base initiales à ce moment et initialisant sa puissance d'émission à une valeur dérivée de ladite puissance instantanée.

2. Système de télécommunication pour mobiles selon la revendication 1, lesdits ordres de commande de puissance étant des ordres d'augmentation ou de diminution de puissance d'une valeur donnée, **caractérisé en ce que** la station de base cible déduit la valeur instantanée de la puissance émise par chaque station de base initiale au moment du commencement de la phase de handover, en additionnant la valeur moyenne de la puissance émise par chaque station de base initiale telle que reçue de ladite station de base initiale à une estimation de l'écart instantané entre la valeur moyenne de cette puissance dédiée et la réalisation instantanée de cette puissance dédiée.

3. Système de télécommunication pour mobiles selon la revendication 2, **caractérisé en ce que** l'estimation de l'écart instantané entre la valeur moyenne de la puissance dédiée et la valeur instantanée de la puissance dédiée est déterminée comme étant la différence entre la valeur intégrée desdits ordres reçus entre un temps de réception par la station de base cible de l'ordre de commencement de la phase de handover et le temps de commencement de ladite phase de handover, et la valeur moyenne de cette valeur entre le temps de réception par la station de base cible de l'ordre de commencement de la phase de handover et le temps de commencement de ladite phase de handover.

**4.** Système de télécommunication pour mobiles selon une des revendications précédentes, **caractérisé en ce que** ladite station de base cible initialise sa puissance d'émission à une valeur égale à la valeur instantanée de la puissance émise par chaque station de base initiale.

**5.** Système de télécommunication pour mobiles selon une des revendications précédentes, **caractérisé en ce que** chaque station de base transmet ladite valeur moyenne de sa puissance d'émission à chaque station de base via un organe de gestion centralisé dudit réseau de stations de base.

**Claims**

**1.** Telecommunication system for mobiles (M), said system including a network of base stations (BS1, BS2) to which said mobiles can be connected and such that a mobile connected to a base station referred to as initial (BS1) transmits to said initial base station, in addition to user signals, transmission power commands (TPC) in order for said initial base station (BS1) to control its own transmission power so that the power received from it by said mobile is equal to a predetermined value, said system further including means whereby, during a phase referred to as a handover phase, said mobile connected to the at least one initial base station is always connected to said at least one initial base station (BS1) and also to another base station referred to as a target base station (BS2), **characterised in that** each initial base station (BS1) to which said mobile is connected regularly transmits to the target base stations to which said mobile is likely to be connected during a handover phase the mean value of its transmission power and **in that** a target base station at the time of commencement of the handover phase deduces from said mean value and said transmission power commands that it receives from said mobile the instantaneous value of the power transmitted by said initial base station or stations at that time and initialising its transmission power to a value derived from said instantaneous power.

**2.** Telecommunication system for mobiles according to claim 1, said transmission power commands being commands to increase or decrease power by a given amount, **characterised in that** the target base station deduces the instantaneous value of the power transmitted by each initial base station at the time of the commencement of the handover phase by adding the mean value of the power transmitted by each initial base station as received from said initial base station to an estimate of the instantaneous difference between the mean value of that dedicated power and the instantaneous production of that dedicated power.

**3.** Telecommunication system for mobiles according to claim 2, **characterised in that** the estimate of the instantaneous difference between the mean value of the dedicated power and the instantaneous value of the dedicated power is determined as being the difference between the integrated value of said commands received between a time of reception by the target base station of the command to commence the handover phase and the time of commencement of said handover phase and the mean value of that value between the time of reception by the target base station of the command to commence the handover phase and the time of commencement of said handover phase.

**4.** Telecommunication system for mobiles according to any one of the preceding claims, **characterised in that** said target base station initialises its transmission power to a value equal to the instantaneous value of the power transmitted by each initial base station.

**5.** Telecommunication system for mobiles according to any one of the preceding claims, **characterised in that** each base station transmits said mean value of its transmission power to each base station via a centralised management unit of said network of base stations.

**Patentansprüche**

**1.** Telekommunikationssystem für Mobilgeräte (M), wobei das System ein Netz aus Basisstationen (BS1, BS2) umfasst, an die sich die Mobilgerät anschließen können, und das bereitgestellt wird, damit ein an eine so genannte Ausgangs-Basisstation (BS1) angeschlossenes Mobilgerät an die so genannte Ausgangs-Basisstation außer Benutzersignalen Leistungssteuerbefehle (TPC) sendet, damit die so genannte Ausgangs-Basisstation (BS1) ihre eigene Sendeleistung steuert, so dass die von ihr durch das Mobilgerät empfangene Leistung gleich einem vorbestimmten Wert ist, wobei das System ferner Mittel umfasst, damit das an die so genannte Ausgangs-Basisstation angeschlossene Mobilgerät während einer so genannten Übergabephase weiter an die mindestens eine Ausgangs-Basisstation (BS1) jedoch auch an eine andere so genannte Ziel-Basisstation (BS2) angeschlossen ist, **dadurch gekennzeichnet, dass** jede so genannte Ausgangs-Basisstation (BS1), an die das Mobilgerät angeschlossen ist, an die so genannten Ziel-Basisstationen, an die sich das Mobilgerät während einer Übergabephase anschließen kann, regelmäßig den durchschnittlichen Wert ihrer Sendeleistung überträgt, und dass eine so genannte Ziel-Basisstation zum Zeitpunkt des Beginns der Übergabephase von dem durchschnittlichen Wert und von den Leistungssteuerbefehlen, die sie von dem Mobilgerät empfängt, den augenblicklichen Wert der Leistung ableitet, die von der oder den Ausgangs-Basisstationen zu diesem Zeitpunkt gesendet wird, und dabei ihre Sendeleistung mit einem Wert initialisiert, der von der augenblicklichen Leistung hergeleitet ist.

2. Telekommunikationssystem für Mobilgeräte nach Anspruch 1, wobei die Leistungssteuerbefehle Befehle zur Leistungserhöhung oder -verringerung eines gegebenen Wertes sind, **dadurch gekennzeichnet, dass** die Ziel-Basisstation den augenblicklichen Wert der Leistung, die von jeder Ausgangs-Basisstation zum Zeitpunkt des Beginns der Übergabephase gesendet wird, ableitet, indem sie den durchschnittlichen Wert der Leistung, die von jeder Ausgangs-Basisstation gesendet wird, wie sie von der Ausgangs-Basisstation empfangen wird, mit einer Schätzung der augenblicklichen Abweichung zwischen dem durchschnittlichen Wert dieser dedizierten Leistung und der augenblicklichen Ausführung dieser dedizierten Leistung addiert.

3. Telekommunikationssystem für Mobilgeräte nach Anspruch 2, **dadurch gekennzeichnet, dass** die Schätzung der augenblicklichen Abweichung zwischen dem durchschnittlichen Wert der dedizierten Leistung und dem augenblicklichen Wert der dedizierten Leistung als der Unterschied zwischen dem integrierten Wert der Befehle, die zwischen einer Zeit, während der die Ziel-Basisstation den Befehl zum Beginn der Übergabephase empfängt, und der Zeit des Beginns der Übergabephase empfangen werden, und dem durchschnittlichen Wert dieses Wertes zwischen der Zeit, während der die Ziel-Basisstation den Befehl zum Beginn der Übergabephase empfängt, und der Zeit des Beginns der Übergabephase bestimmt wird.

4. Telekommunikationssystem für Mobilgeräte nach einem der vorhergehenden Ansprüche, **dadurch gekennzeichnet, dass** die Ziel-Basisstation ihre Sendeleistung auf einen Wert gleich dem augenblicklichen Wert der Leistung, die von jeder Ausgangs-Basisstation gesendet wird, initialisiert.

5. Telekommunikationssystem für Mobilgeräte nach einem der vorhergehenden Ansprüche, **dadurch gekennzeichnet, dass** jede Basisstation den durchschnittlichen Wert ihrer Sendeleistung an jede Basisstation über ein zentrales Verwaltungsorgan des Basisstationsnetzes überträgt.

# FIG. UNIQUE

**EP 1 128 694 B1**

## RÉFÉRENCES CITÉES DANS LA DESCRIPTION

**Documents brevets cités dans la description**

- WO 9931819 A